(19) Europäisches Patentamt
European Patent Office
Office européen des brevets

(11) **EP 0 629 082 B1**

(12) **FASCICULE DE BREVET EUROPEEN**

(45) Date de publication et mention
de la délivrance du brevet:
**03.02.1999 Bulletin 1999/05**

(51) Int Cl.⁶: **H04N 5/232**, H04N 5/14,
G06T 7/20

(21) Numéro de dépôt: **94401070.1**

(22) Date de dépôt: **11.05.1994**

(54) **Procédé de correction spatiale d'image numérique**

Verfahren zur räumlichen Korrektur von digitalen Bildern

Spatial correction method of digital images

(84) Etats contractants désignés:
**DE GB**

(30) Priorité: **11.06.1993 FR 9307081**

(43) Date de publication de la demande:
**14.12.1994 Bulletin 1994/50**

(73) Titulaire: **SAGEM SA**
**75116 Paris (FR)**

(72) Inventeur: **Baillet, Gérard**
**F-75625 Paris Cedex 14 (FR)**

(74) Mandataire: **Cabinet Martinet & Lapoux**
**BP 405**
**78055 Saint Quentin en Yvelines Cédex (FR)**

(56) Documents cités:
**GB-A- 2 168 874        US-A- 5 189 518**

• **SMPTE JOURNAL, vol.101, no.2, Février 1992, SCARSDALE, NY US pages 66 - 75 UOMORI ET AL. 'Electronic Image Stabilization System for Video Cameras and VCRs'**

## Description

La présente invention concerne d'une manière générale le traitement d'image numérique pour améliorer l'aspect visuel de d'images et ainsi en faciliter l'exploitation ultérieure.

L'invention a trait plus particulièrement à un procédé de correction spatiale d'images numériques captées par des dispositifs embarqués dans des engins mobiles tels qu'avions ou navires. Un tel dispositif "photographie" une image ligne par ligne et reconstitue l'image par la juxtaposition des lignes. Or l'engin mobile subit au cours de son déplacement des mouvements perturbants tels que roulis ou dérive (lacet) qui provoquent des distorsions de l'image.

Si le dispositif embarqué est fixe par rapport à l'engin mobile, un gyromètre de mesure de vitesse angulaire peut être associé au dispositif de manière à mesurer en temps réel l'angle des mouvements perturbants par rapport à la trajectoire de l'engin et à corriger en conséquence la distorsion de l'image.

Alternativement, le dispositif embarqué peut être placé sur une plate-forme stabilisée qui corrige tout mouvement perturbant. Le dispositif embarqué ne subit alors plus de mouvement perturbant.

Ces matériels de correction, tels que gyromètre de mesure de vitesse angulaire ou plate-forme stabilisée, sont très coûteux et ne corrigent pas des distorsions supplémentaires, sous forme d'instabilité dans le sens ligne de l'image, provoquées par du bruit sur un signal de synchronisation ("gigue") lors de la transmission des images par exemple de l'engin mobile, tel qu'avion ou navire, vers une station terrestre de traitement et diffusion ou reproduction d'image.

La demande de brevet GB-A-2 168 874 divulgue un procédé de correction spatiale d'une image numérique dans laquelle les lignes de pixel sont décalées les unes par rapport aux autres principalement à cause du roulis de l'engin, tel qu'avion. La correction consiste à comparer deux à deux des lignes d'image perpendiculaires à la direction de l'avion, en accumulant les différences entre des pixels de deux lignes pour cinq décalages de pixel et en déterminant la différence accumulée minimale afin d'en déduire le décalage entre les deux lignes. Toutefois, ce décalage exprimé en nombre entier de pixels ne reflète pas exactement le décalage réel des lignes d'image.

La présente invention vise à fournir un procédé de traitement spatial d'image numérique qui améliore l'aspect visuel d'une image, en corrigeant plus précisément non seulement des distorsions d'image dues à des mouvements perturbants, mais également des distorsions dues à des défauts de synchronisation.

A cette fin, un procédé de correction spatiale d'image numérique composée d'un ensemble de rangées de pixels qui sont des lignes ou des colonnes de l'image,

comprenant la comparaison des rangées deux à deux pour déterminer des premiers décalages entre rangées exprimes en nombre entier de pixel,

est caractérisé en ce qu'il comprend

la détermination de seconds décalages entre rangées exprimés en nombre non entier de pixel, en fonction des premiers décalages,
la détermination pour chaque rangée d'un troisième décalage de ladite rangée par rapport à une rangée de référence en fonction des seconds décalages, et
la correction de chaque rangée par un décalage des pixels de ladite chaque rangée par rapport à la rangée de référence égal à la partie entière du troisième décalage pour ladite chaque rangée, et par un lissage spatial de pixels de ladite chaque rangée avec des coefficients de lissage fonction du troisième décalage pour ladite chaque rangée.

La comparaison des rangées deux à deux comprend pour deux rangées données, le calcul de sommes de corrélation entre les deux rangées décalées respectivement lorsque l'une est soumise par rapport à l'autre à des décalages prédéterminés exprimés en nombre entier de pixel, la recherche d'une somme de corrélation minimale parmi les sommes de corrélation calculées afin d'en déduire ledit premier décalage entre les deux rangées exprimé en nombre entier de pixel.

Une somme de corrélation entre deux rangées décalées d'un décalage exprimé en nombre entier de pixel est égale à la somme des valeurs absolues des différences des valeurs des pixels d'une rangée et des valeurs des pixels décalés dudit décalage de l'autre rangée.

De préférence, la détermination du second décalage entre deux rangées exprimée en nombre non entier de pixel est affinée par une interpolation des sommes de corrélation fonction des décalages prédéterminés entre les deux rangées, par une fonction polynômiale d'ordre supérieur ou égal à 2 autour du premier décalage, le second décalage étant l'abscisse d'un minimum de la fonction d'interpolation. Par exemple, la fonction polynômiale peut-être une fonction parabolique dont le sommet constitue ledit minimum.

La détermination pour une rangée donnée d'un troisième décalage de ladite rangée par rapport à une rangée de référence est réalisée par la somme des seconds décalages des rangées comprises entre la rangée de référence et la rangée donnée.

Selon une autre caractéristique, les coefficients de lissage spatial d'une rangée sont tels que leur somme est égale à 1. Par exemple, les coefficients de lissage spatial d'une rangée sont tels qu'un premier coefficient est égal à la partie décimale du troisième décalage de la rangée et qu'un second coefficient est égal au complémentaire à 1 du premier coefficient.

De préférence, les seconds décalages entre rangées sont remplacés par des décalages corrigés fonctions des seconds décalages et tels que leur valeur moyenne est nulle. Cette étape est fondée sur la distinction entre les décalages à corriger dus à des perturbations telles que roulis et des "décalages naturels" dans l'image, tels qu'une route ou un cours d'eau non parallèle à la trajectoire de l'engin.

En variante, lorsque les décalages à corriger sont dus à de la dérive, les seconds décalages entre rangées sont remplacés par des décalages corrigés respectivement égaux à la moyenne des seconds décalages.

D'autres caractéristiques et avantages de la présente invention apparaîtront plus clairement à la lecture de la description suivante de plusieurs réalisations préférées de l'invention, en référence aux dessins annexés correspondants dans lesquels :

- la figure 1 est une vue schématique en perspective d'un aéronef équipé d'un dispositif de prise de vue;
- la figure 2 est une représentation schématique d'un premier type de déformation d'image;
- la figure 3 est une représentation schématique d'un second type de déformation d'image;
- la figure 4 est un bloc-diagramme des étapes principales d'un procédé de correction d'image selon une première réalisation;
- la figure 5 est un algorithme de détermination de premier et second décalages entre lignes selon une première réalisation;
- la figure 6 est un algorithme de correction de second décalage entre lignes selon la première réalisation;
- la figure 7 est un algorithme de détermination de l'image corrigée selon la première réalisation;
- la figure 8 est un bloc-diagramme des étapes principales d'un procédé de correction d'image selon une seconde réalisation;
- la figure 9 est un algorithme de détermination de premier et second décalages entre lignes selon la seconde réalisation;
- la figure 10 est un algorithme de correction de second décalage entre lignes selon la seconde réalisation; et
- la figure 11 est un algorithme de détermination de l'image corrigée selon la seconde réalisation.

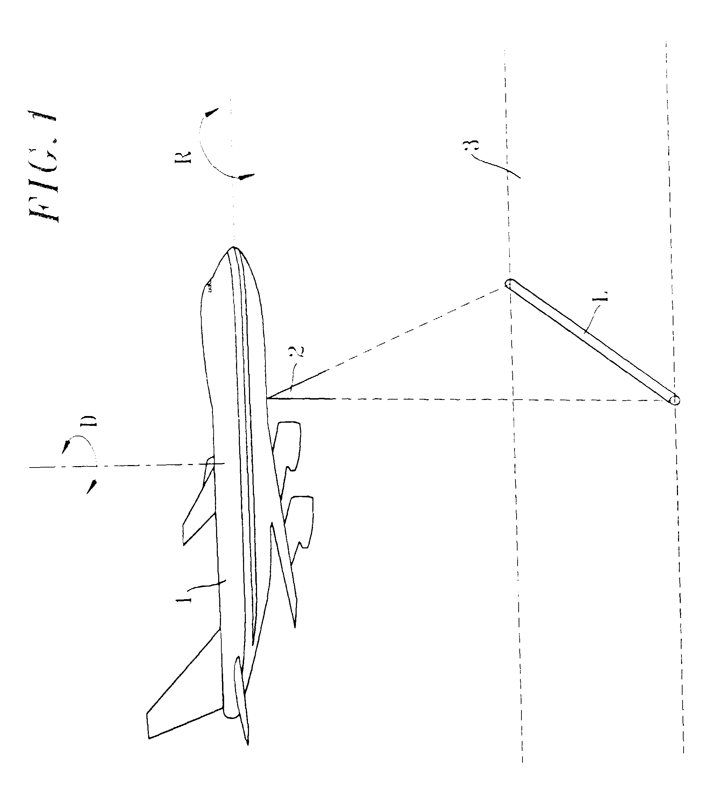

En référence à la figure 1, dans un aéronef 1, tel qu'un avion ou un drone, est fixé un moyen de prise de vue 2 comprenant essentiellement un moyen de détection de préférence sensible aux infrarouges, un analyseur mono-ligne et un moyen de mémoire et/ou un moyen de transmission de données.

L'aéronef 1 survole une bande rectiligne de terrain 3 de manière à photographier cette bande. La prise de vue est effectuée par un balayage électronique ligne par ligne. Une ligne L est une "bande élémentaire" de la bande 3, transversale à la bande 3, et la juxtaposition d'un ensemble de lignes successives forme une image d'une portion de bande 3, le déplacement de l'aéronef le long de la bande fournissant le balayage d'image (trame).

Une ligne captée par le moyen de détection subit notamment une conversion analogique/numérique en entrée de l'analyseur. Une ligne est un ensemble de M pixels et un groupe de N lignes est une matrice de N x M pixels, formant une image numérique à N lignes et M colonnes. Une ligne ou une colonne de l'image constitue une rangée de pixels dans la matrice, et par extension une rangée de l'image au sens de la présente invention. Une ligne numérique est mémorisée par le moyen de mémoire. En variante, les niveaux de luminosité des pixels de la ligne sont émis par le moyen de transmission vers un récepteur associé à un moyen de mémorisation et de traitement de données. Le terme "luminosité" se rapporte à la luminance pour une image en noir et blanc, ou bien à l'une des composantes primaires rouge, verte et bleue ou à l'un des signaux de luminance et de chrominance pour une image en couleur.

Le dispositif de prise de vue et en particulier le moyen de détection optique sont fixes par rapport à l'aéronef. Pour obtenir des images reproduisant le plus fidèlement possible la scène effective de la bande 3, l'aéronef vole de préférence en ligne droite et à altitude constante. Cependant, en raison des conditions atmosphériques, l'aéronef subit en cours de vol des mouvements perturbants notamment de roulis, c'est-à-dire des petites rotations alternées R autour de l'axe longitudinal de l'aéronef, et de dérive, c'est-à-dire une rotation D autour d'un axe vertical, ou de lacet, c'est-à-dire des petites rotations alternées autour d'un axe vertical.

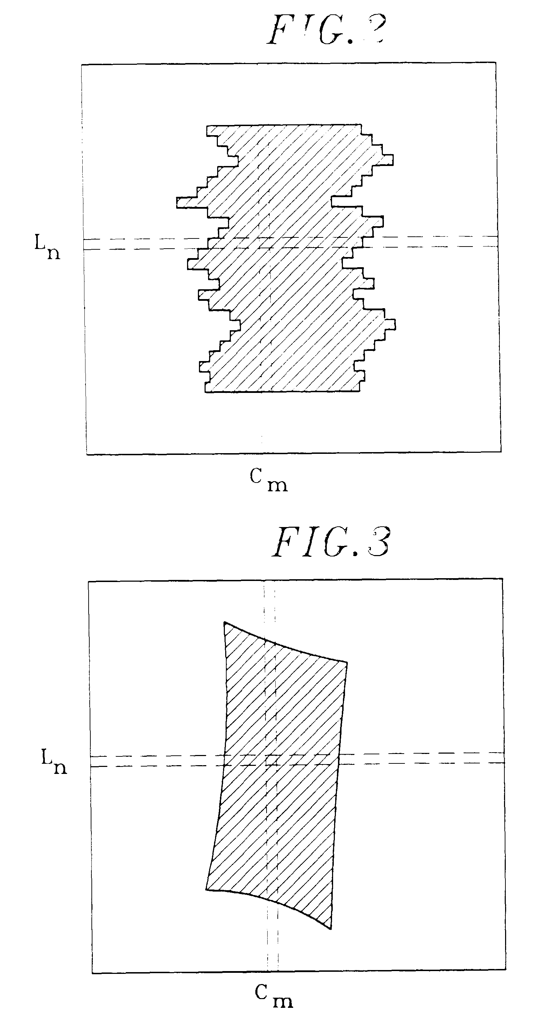

Dans la figure 2 est montrée schématiquement une image perturbée uniquement par le roulis de l'aéronef. La forme géométrique réelle de la scène sur la portion de bande de terrain photographiée est un rectangle foncé, sur un fond clair. L'image fournie par l'analyseur à bord de l'aéronef soumis au roulis présente une forme géométrique déformée.

L'image est composée de N lignes $L_1$ à $L_N$ et de M colonnes $C_1$ à $C_M$, dont une ligne $L_n$ et une colonne $C_m$

sont représentées à titre d'exemple, avec $1 \leq n \leq N$ et $1 \leq m \leq M$. Le roulis provoque une déformation de l'image dans le sens ligne, c'est-à-dire les lignes sont décalées les unes par rapport aux autres.

En pratique, une image comprend par exemple 1024 lignes et 1024 colonnes.

En référence à la figure 3, une image schématique est perturbée uniquement par des dérives de l'aéronef principalement suivant un même sens par rapport à la trajectoire de l'aéronef. La forme géométrique réelle est à nouveau un rectangle foncé sur fond clair. L'image fournie par l'analyseur à bord de l'aéronef soumis à la dérive présente une forme géométrique déformée résultant de la transformation du rectangle d'origine sensiblement en losange.

Une ligne $L_n$ parmi N lignes et une colonne $C_m$ parmi M colonnes sont également représentées dans la figure 3. La dérive provoque une déformation dans le sens colonne, c'est-à-dire les colonnes sont décalées les unes par rapport aux autres.

En pratique, les déformations dues aux roulis et les déformations dues à la dérive se combinent aléatoirement. Dans le cas d'images réelles, porteuses en général d'un grand nombre de détails, ces deux types de déformation rendent difficiles la lecture et l'interprétation des images par un opérateur. De plus, d'autres déformations altèrent une image. En particulier, dans le cas de la transmission d'images entre l'aéronef et un moyen de réception, la synchronisation des données est réalisée par une référence de seuil sur un front montant d'un signal de synchronisation. Lorsque le front montant est bruité, la position du seuil sur le front montant subit des variations provoquant un phénomène de gigue (jitter), c'est-à-dire d'instabilité dans le sens des lignes de l'image. Cette instabilité provoque des décalages entre lignes analogues aux déformations dues au roulis, mais de plus faibles amplitude.

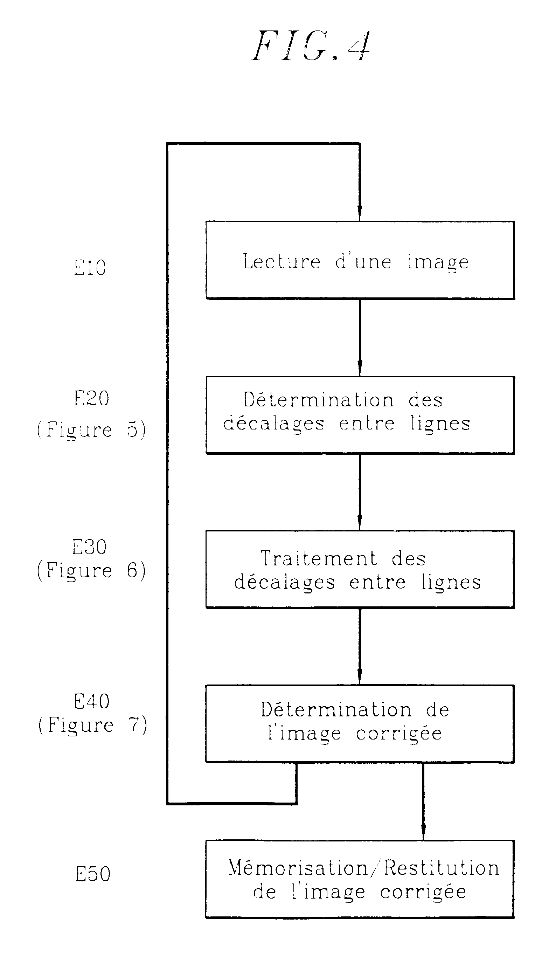

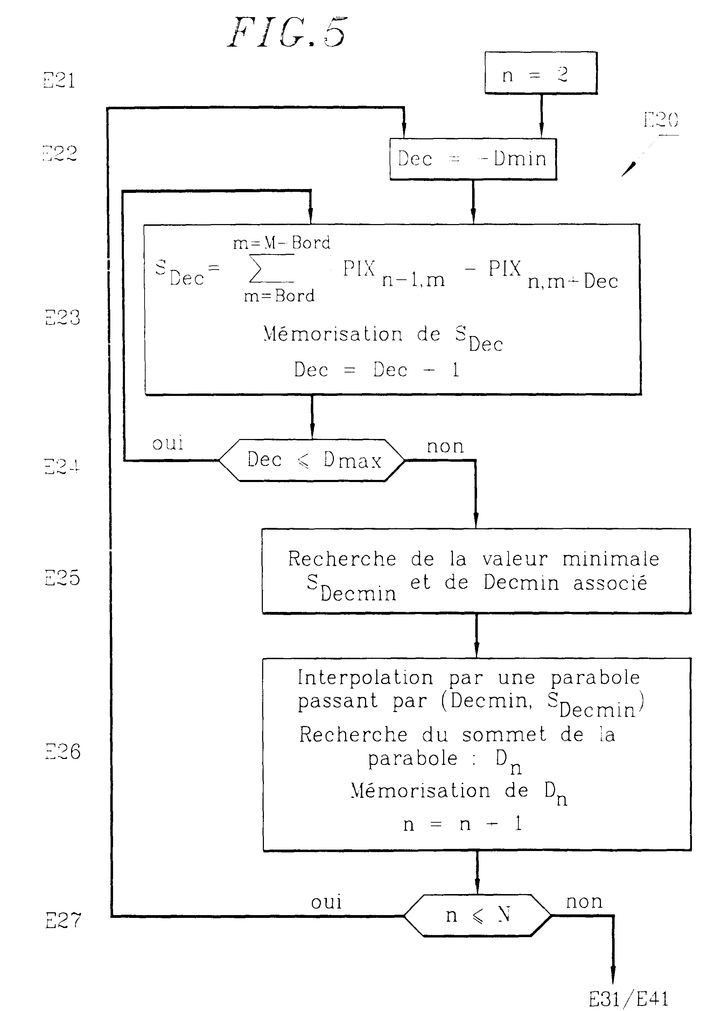

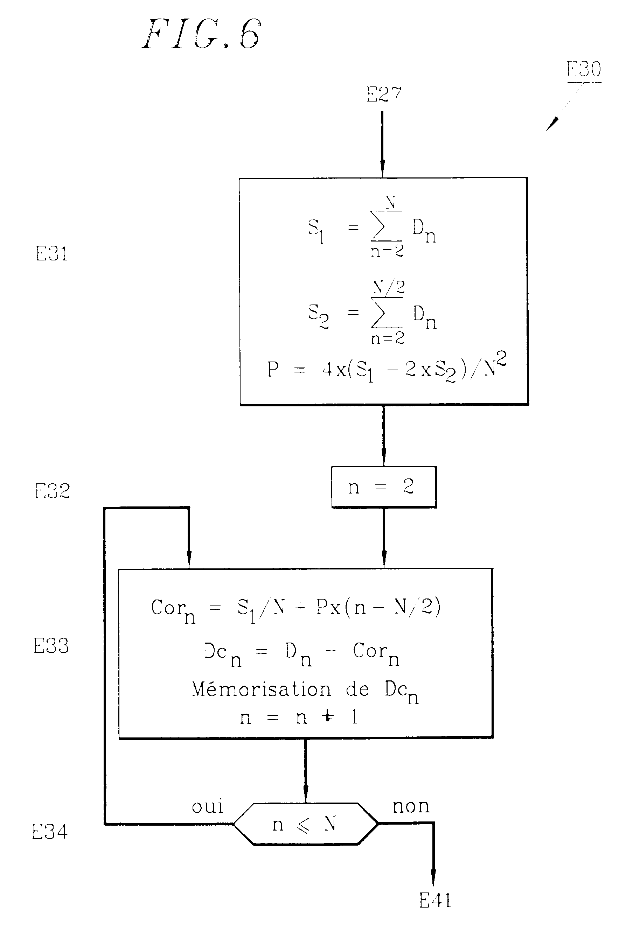

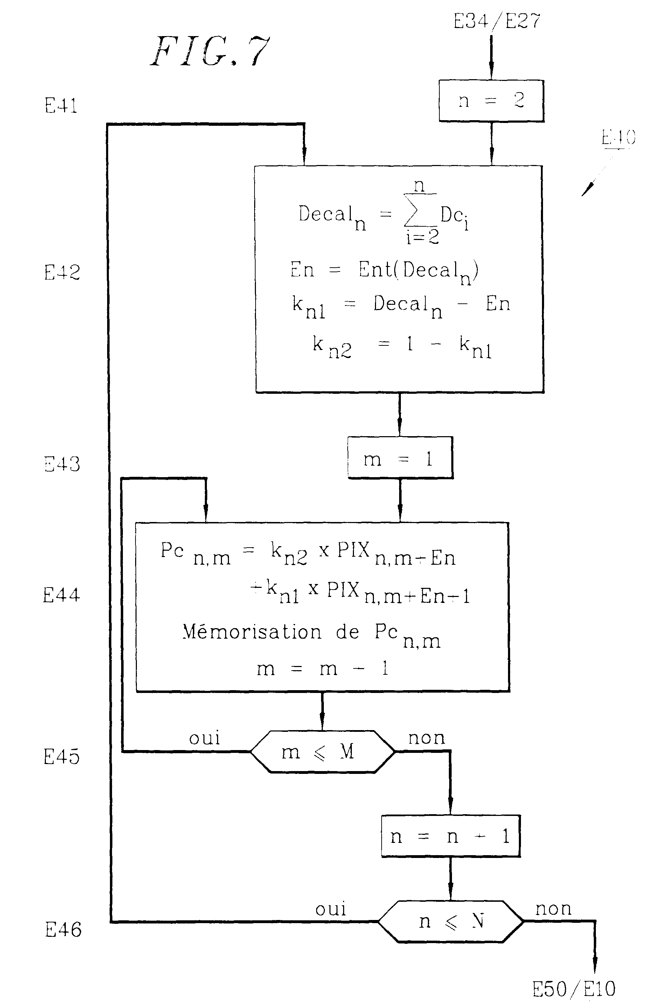

En référence à la **figure 4**, un **procédé de correction d'image** destiné plus particulièrement à une image **déformée par du roulis** est illustré sous la forme d'un algorithme composé de cinq étapes principales E10 à E50 et programmé dans une mémoire de calculateur. La correction d'image est réalisée dans l'aéronef, ou en variante au sol. Dans tous les cas, comme il a déjà été précisé, une image est une matrice de N x M pixels mémorisée. Le procédé comprend une première étape E10 de lecture d'une image qui consiste à lire les niveaux de luminosité des N x M pixels de l'image à N lignes et M colonnes dans une mémoire d'image.

L'étape E20 détermine et mémorise les décalages des lignes prises deux à deux successivement. L'étape E20 est composée d'un ensemble d'étapes E21 à E27 qui seront décrites en détail en référence à la figure 5.

L'étape E30 traite les décalages entre lignes pour séparer les décalages dus au roulis, de tout décalage non lié à la prise de vue, mais existant réellement sur la portion de terrain photographiée, par exemple une route formant un angle avec les bords de l'image, ou un cours d'eau qui serpente. L'étape E30 est composée d'un ensemble d'étapes E31 à E34 qui seront décrites en détail en référence à la figure 6.

L'étape E40 détermine l'image corrigée à partir des décalages entre lignes déterminés à l'étape E30. En variante, l'étape E40 détermine l'image corrigée à partir des décalages entre lignes déterminés à l'étape E20; cette variante ne comprend pas l'étape E30.

Dans tous les cas, l'étape E40 se compose d'un ensemble d'étapes E41 à E46 qui seront décrites en détail en référence à la figure 7.

La nouvelle image corrigée des effets du roulis est mémorisée à l'étape E50, et est, de préférence, également affichée à l'écran d'une console de visualisation associée au calculateur.

En variante, l'image corrigée à l'étape E40 peut être traitée à nouveau à partir de l'étape E10. Plusieurs cycles de correction successifs améliorent plus l'image qu'un cycle unique. Le nombre de cycles de correction est soit fixe, déterminé une fois pour toute, par exemple égal à 1, 2 ou 3, soit choisi par l'opérateur, soit encore déterminé dynamiquement par l'algorithme sur un critère de qualité de l'image corrigée.

Comme illustrée à la **figure 5**, la **détermination des décalages entre lignes** comprend un ensemble d'étapes E21 à E27. Une ligne quelconque $L_n$ de l'image est comparée à la ligne adjacente $L_{n-1}$ précédemment mémorisée. L'étape E21 initialise la détermination à la ligne $L_2$ qui est comparée à la ligne $L_1$. Dans la suite, la ligne $L_1$ n'est pas affectée par la correction d'image et est une ligne de référence. En variante, l'ordre des calculs est inversé, la ligne de référence est la ligne $L_N$ et la comparaison commence alors à la ligne $L_{N-1}$, qui est comparée à la ligne $L_N$. Selon une autre variante, la ligne de référence est une ligne quelconque de l'image.

L'étape E22 initialise un décalage en nombre entier de pixel Dec à une valeur -Dmin. Le décalage Dec est le décalage de comparaison de la ligne $L_n$ avec la ligne $L_{n-1}$.

Pour une valeur de décalage Dec donnée, l'étape E23 compare la ligne $L_n$ à la ligne $L_{n-1}$, en calculant une somme de corrélation $S_{Dec}$ entre les deux lignes, pour le décalage Dec. La somme $S_{Dec}$ est égale à :

$$\sum_{m=Bord}^{m\_M\_Bord} \left| PIX_{n-1,m} - PIX_{n,m-Dec} \right|$$

où :

- PIX$_{n-1,m}$ est le niveau de luminosité du pixel au croisement de la ligne L$_{n-1}$ et de la colonne C$_m$,

- PIX$_{n,m+Dec}$ est le niveau de luminosité du pixel au croisement de la ligne L$_n$ et de la colonne C$_{m+Dec}$,

- Bord est un entier, strictement inférieur à M, égal à un nombre de pixels situés sur chacun des deux bords de l'image, et non considérés dans la comparaison; à titre d'exemple, pour des lignes de 1024 pixels, les bords non considérés sont d'une largeur comprise entre 50 et 100 pixels.

La valeur de S$_{Dec}$ est mémorisée, puis le décalage de comparaison Dec est incrémenté de 1.
A l'étape E24, le décalage Dec est comparé à une valeur prédéterminée Dmax qui est la valeur maximale du décalage Dec. Si la valeur du décalage Dec est inférieure ou égale à la valeur Dmax, l'étape E23 est à nouveau déroulée. Sinon, toutes les sommes de corrélation S$_{Dec}$ pour Dec variant de -Dmin à Dmax sont déterminées, c'est-à-dire des sommes au nombre de (Dmin + Dmax + 1), et l'algorithme passe à l'étape E25.
Les bornes de variation -Dmin et Dmax du décalage Dec sont à titre d'exemple -25 et +25 pixels.
L'étape E25 recherche la somme minimale S$_{Decmin}$ parmi les sommes déterminées précédemment, ainsi que le décalage Decmin associé. Pour trouver la somme minimale S$_{Decmin}$ parmi (Dmin + Dmax + 1) sommes, les valeurs adjacentes à S$_{Dec}$ sont comparées deux à deux. La somme minimale S$_{Decmin}$ est la première somme trouvée dont les deux sommes adjacentes précédente et suivante lui sont supérieures lorsque Dec croît de - Dmin à Dmax. En variante, toutes les sommes S$_{Dec}$ sont analysées, en comparant les sommes deux à deux, et en gardant comme résultat de chaque comparaison la somme S$_{Dec}$ la plus faible. Selon une autre variante, la somme minimale S$_{Decmin}$ est la première somme trouvée dont les deux sommes adjacentes précédente et suivante lui sont supérieures de valeurs de différence supérieures à un seuil prédéterminé.
Dans tous les cas, à la somme minimale trouvée S$_{Decmin}$ est associé le décalage de la ligne L$_n$ par rapport à la ligne L$_{n-1}$ exprimé en nombre entier de pixel Decmin. Or, un décalage exprimé en nombre entier de pixel ne sert à corriger une image que d'un décalage relativement élevé d'une ligne à l'autre. En pratique, le décalage d'une ligne à l'autre survenu au cours de la prise de vue est fréquemment inférieur au pixel; l'invention prévoit alors d'affiner le calcul du décalage.
L'étape E26 détermine le décalage D$_n$ de la ligne L$_n$ par rapport à la ligne L$_{n-1}$, avec une précision inférieure au pixel; d'une manière générale, D$_n$ est un nombre non entier de pixel. Le décalage D$_n$ est déterminé en fonction des décalages Decmin, (Decmin-1) et (Decmin + 1) ainsi que des sommes de corrélation associées à chacun de ces décalages D$_{Decmin}$, S$_{Decmin-1}$ et S$_{Decmin+1}$. Dans un repère ayant les décalages pour abscisses x et les sommes de corrélation pour ordonnées y, ces trois couples de décalage et somme définissent trois points. En recherchant la parabole d'équation :

$$y = ax^2 + bx + c$$

passant par ces trois points, est déduit le sommet de cette parabole qui a pour ordonnée la somme minimum affinée et pour abscisse le décalage plus précis D$_n$ de la ligne L$_n$ par rapport à la ligne L$_{n-1}$. Le décalage D$_n$ résulte de la résolution du système à trois équations de parabole correspondant aux trois points afin d'en déduire les coefficients a, b et c. Ce décalage est ainsi égal à :

$$- b/(2a) = Decmin + 0{,}5x(S_{Decmin + 1} -$$

$$S_{Decmin-1})/ (2 \times S_{Decmin} - S_{Decmin-1} - S_{Decmin + 1})$$

La valeur de D$_n$ est ensuite mémorisée et le paramètre n est incrémenté de 1.
En variante, le décalage D$_n$ peut être déterminé comme l'abscisse du minimum de la parabole passant par les trois points (Decmin, S$_{Decmin}$), (Decmin + k, S$_{Decmin + k}$), (Decmin-k, S$_{Decmin-k}$) où k est un entier, valant 2 ou 3 par exemple. Selon une autre variante, la parabole est remplacée par une fonction polynômiale d'ordre plus élevé que deux.
L'étape E27 compare la valeur de n avec le nombre total de lignes N. Si n est inférieur ou égal à N, il reste au moins une ligne pour laquelle le décalage D$_n$ n'a pas été déterminé et le calcul reprend pour une nouvelle ligne à partir de l'étape E22. Sinon, tous les décalages D$_2$ à D$_N$ sont déterminés et l'algorithme passe à l'étape E31 qui est décrite dans la suite.
En variante, une ligne quelconque L$_n$ n'est pas comparée à la ligne adjacente L$_{n-1}$, mais à la ligne L$_{n-i}$, où i

est un entier supérieur à 1, puis le paramètre n est incrémenté de i. A titre d'exemple, l'entier i vaut 2 et seules les lignes de rang pair sont traitées. Les lignes de rang impair sont décalées (étape E40) d'un décalage égal au décalage calculé pour la ligne de rang pair précédente. Le nombre de calculs est réduit et la vitesse d'exécution est augmentée.

En référence à la **figure 6**, le **traitement des décalages entre lignes** comprend quatre étapes principales E31 à E34. Ce traitement a pour but de corriger les valeurs des décalages $D_n$, pour n variant de 2 à N, déterminées à l'étape E26. En effet, les décalages $D_n$ dépendent des décalages dus au roulis, mais également de "décalages" représentés par des traits inclinés ou brisés et existant réellement sur la bande de terrain considérée, par exemple une route non parallèle aux bords de la bande de terrain. La correction des décalages repose sur le constat que les variations de l'orientation de l'aéronef par rapport à sa trajectoire dues au roulis sont nulles statistiquement. Par conséquent, les décalages dus au roulis sont nuls en moyenne sur un grand nombre de lignes, 1024 par exemple, tandis que les "décalages existant réellement" sur le terrain ne sont pas a priori nuls en moyenne. La correction a pour résultat des valeurs de décalage corrigées, dont la moyenne est nulle. La correction est du premier ordre sur les décalages; en variante, la correction est d'ordre plus élevé.

La correction des décalages est telle qu'un ensemble prédéterminé de lignes de l'image n'est pas modifié lors de la détermination de l'image corrigée, qui sera décrite en détail dans la suite. A titre d'exemple, si l'entier N est pair, cet ensemble prédéterminé de lignes comprend les lignes $L_1$, $L_{N/2}$ et $L_N$. En variante, l'ensemble comprend un nombre plus important de lignes, par exemple 4,5 ou 6, qui sont régulièrement réparties ou non dans l'image. Selon une autre variante, le nombre et/ou la position dans l'image des lignes de cet ensemble sont choisis par l'opérateur.

L'étape E31 détermine trois coefficients $S_1$, $S_2$ et P utilisés pour la correction des décalages. Le coefficient $S_1$ est la somme de tous les décalages $D_n$, pour $2 \leq n \leq N$. Le coefficient $S_2$ est la somme des décalages $D_n$, pour $2 \leq n \leq N/2$, c'est-à-dire pour la demi-image entre les lignes $L_1$ et $L_{N/2}$. Le coefficient P représente un coefficient égal à $4(S_1-2S_2)/N^2$ relatif à la variation du décalage des lignes par rapport à la première ligne de référence entre les lignes limites $L_1$ et $L_{N/2}$, et $L_{N/2}$ et $L_N$.

L'étape E32 initialise la détermination de la correction de décalage à la deuxième ligne puisque, comme il a déjà été précisé, la première ligne de l'image n'est pas modifiée lors de la détermination de l'image corrigée. L'étape E33 calcule un coefficient correcteur $Cor_n$, qui est égal à $S1/N + P \times (n - N/2)$ afin de ramener la variation du décalage des lignes par rapport à la première ligne de référence le long d'une droite. Le coefficient $Cor_n$ est ensuite soustrait du décalage $D_n$, ce qui produit un décalage corrigé $Dc_n$. Le paramètre n est incrémenté de 1.

L'étape E34 compare le paramètre n à la valeur N; si n est inférieur ou égal à N, l'étape E33 est à nouveau déroulée pour cette nouvelle valeur de n. Sinon, tous les décalages corrigés $Dc_n$, pour $2 \leq n \leq N$, sont déterminés et l'algorithme passe à l'étape E41 qui est détaillée dans la suite.

En référence à la **figure 7**, la **détermination de l'image corrigée** comprend un ensemble d'étapes E41 à E46 et est effectuée ligne par ligne.

L'étape E41 initialise la correction de l'image à la deuxième ligne $L_2$ de l'image. A l'étape E42 est déterminé un décalage $Decal_n$ de la ligne $L_n$ qui est égal à la somme des décalages $Dc_i$, pour $2 \leq n$, et qui définit le décalage de la ligne $L_n$ par rapport à la ligne de référence $L_1$. En variante, $Decal_n$ est la somme des décalages $D_i$ pour $2 \leq i \leq n$, calculés à l'étape E26. Dans tous les cas, le décalage $Decal_n$ est en général un nombre non entier, dont la partie entière est notée En. La partie décimale de $Decal_n$ est notée $k_{n1}$ et le complémentaire à 1 de $k_{n1}$ est noté $k_{n2}$. L'étape E43 initialise à 1 un paramètre m, représentatif du rang d'un pixel dans la ligne $L_n$.

L'étape E44 détermine le niveau de luminance corrigé $Pc_{n,m}$ du pixel de rang m dans la ligne $L_n$ par un décalage de pixel égal à la partie entière de $Decal_n$ puis par un lissage spatial de valeurs de pixel de la ligne. Le lissage résulte de la contribution de deux pixels enregistrés adjacents de rangs $m + En$ et $m + En + 1$ dans le pixel corrigé. Le niveau corrigé $Pc_{n,m}$ est ainsi la somme des niveaux de pixel $PIX_{n,m+En}$ et $PIX_{n,m+En+1}$ respectivement pondérés par les coefficients $k_{n1}$ et $k_{n2}$. Le niveau corrigé $Pc_{n,m}$ est mémorisé et le paramètre m est incrémenté de 1. En variante, les coefficients $k_{n1}$ et $k_{n2}$ sont déterminés différemment, et sont par exemple égaux à 0 et 1 respectivement, ou à 0,5 et 0,5. Selon une autre variante, le niveau corrigé $Pc_{n,m}$ est une somme pondérée de plus de deux niveaux de pixel, par exemple $PIX_{n,m+En-1}$, $PIX_{n,m+En}$ et $PIX_{n,m+En+1}$. Dans tous les cas, les coefficients de pondération sont de préférence tels que leur somme est égale à 1, de sorte qu'il n'y ait pas de modification de la valeur moyenne des pixels de la ligne.

L'étape E45 vérifie si le paramètre m est inférieur ou égal au nombre M de colonne de l'image et donc au nombre de pixels de la ligne $L_n$. Si m est inférieur ou égal à M, il reste au moins un pixel dont la valeur corrigée n'a pas été déterminée, et l'étape E44 est à nouveau parcourue. Lorsque tous les pixels de la ligne $L_n$ sont corrigés, alors le paramètre n est incrémenté de 1 pour passer à la ligne suivante. L'étape E46 vérifie si le paramètre n est inférieur ou égal à N. En cas de réponse positive, l'algorithme déroule les étapes E42 à E45 pour une nouvelle ligne. Lorsque toutes les lignes sont corrigées, l'algorithme passe à l'étape E50 de mémorisation de l'image corrigée. Comme il a déjà été dit, en variante, les étapes principales E10 à E40 peuvent être déroulées plusieurs fois séquentiellement avant de passer à l'étape E50.

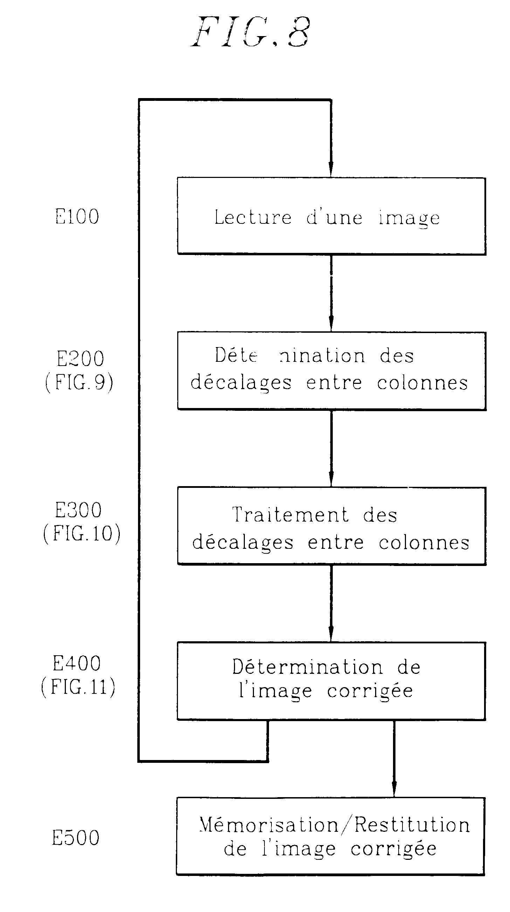

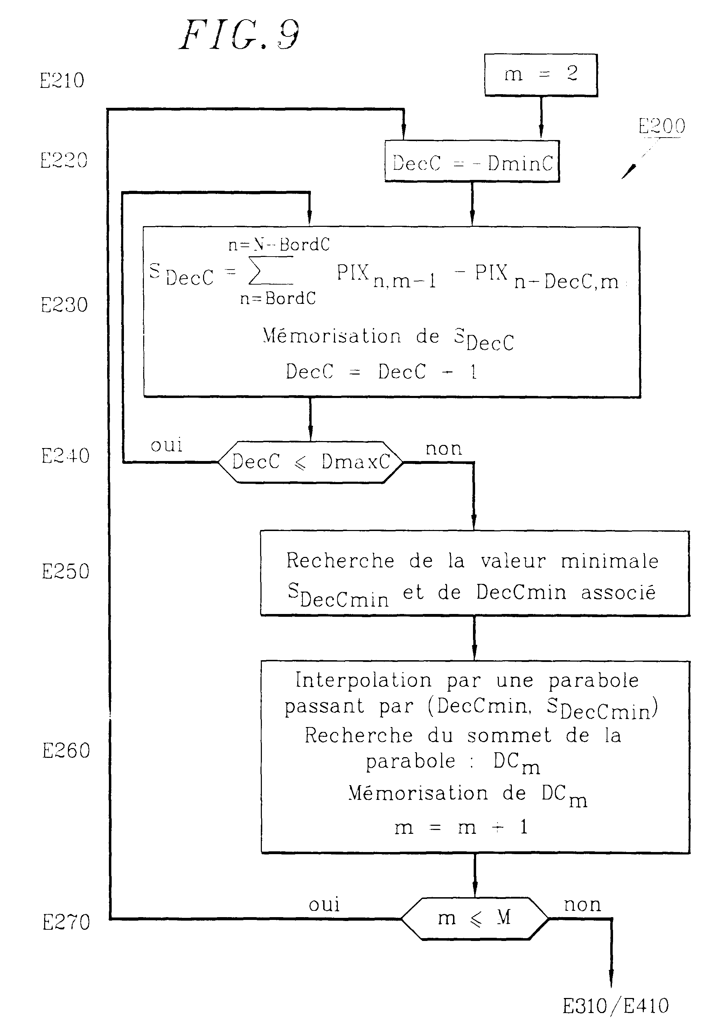

En référence à la **figure 8**, un **procédé de correction de déformation d'image due à la dérive** est illustré sous la forme d'un algorithme composé de cinq étapes principales E100 à E500, analogues aux étapes E10 à E50 précédemment décrites en référence à la figure 4. La principale différence est que la correction de l'image est effectuée colonne par colonne, et non ligne par ligne. A L'étape E100 sont lus N x M niveaux de luminosité de pixel mémorisés d'une image à N lignes et M colonnes.

L'étape E200 détermine et mémorise les décalages des colonnes prises deux à deux successivement. L'étape E200 est composée d'un ensemble d'étapes E210 à E270 qui seront décrites en détail en référence à la figure 9.

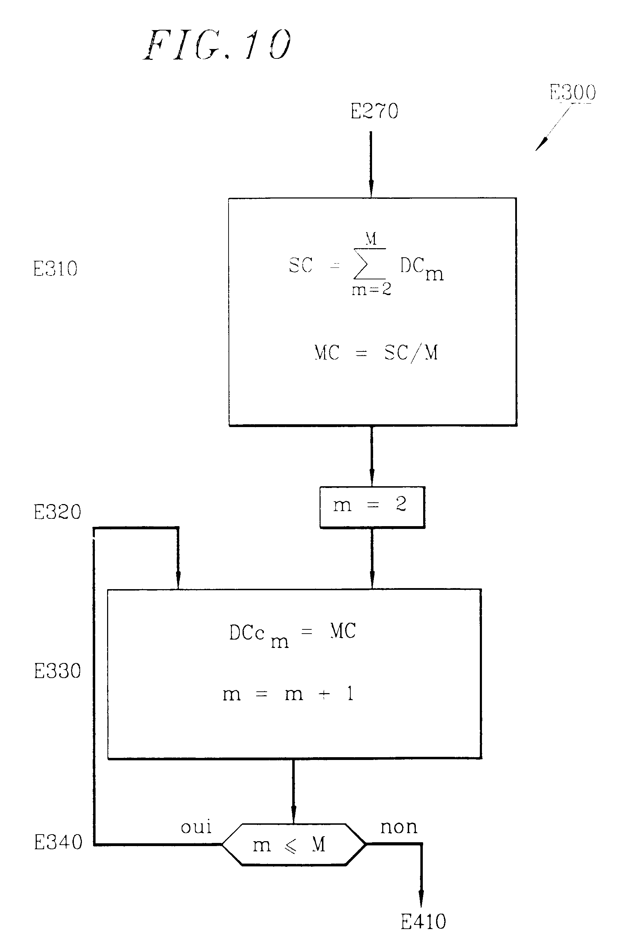

L'étape E300 traite les décalages entre colonnes pour séparer les décalages dûs à la dérive de tout décalage non lié à la prise de vue, mais existant réellement sur la bande de terrain photographiée. L'étape E300 est composée d'un ensemble d'étapes E310 à E340 qui seront décrites en détail en référence à la figure 10.

L'étape E400 détermine l'image corrigée à partir des décalages entre colonnes déterminés à l'étape E300. En variante, l'étape E400 détermine l'image corrigée à partir des décalages entre colonnes déterminés à l'étape E200; cette variante ne comprend pas l'étape E300.

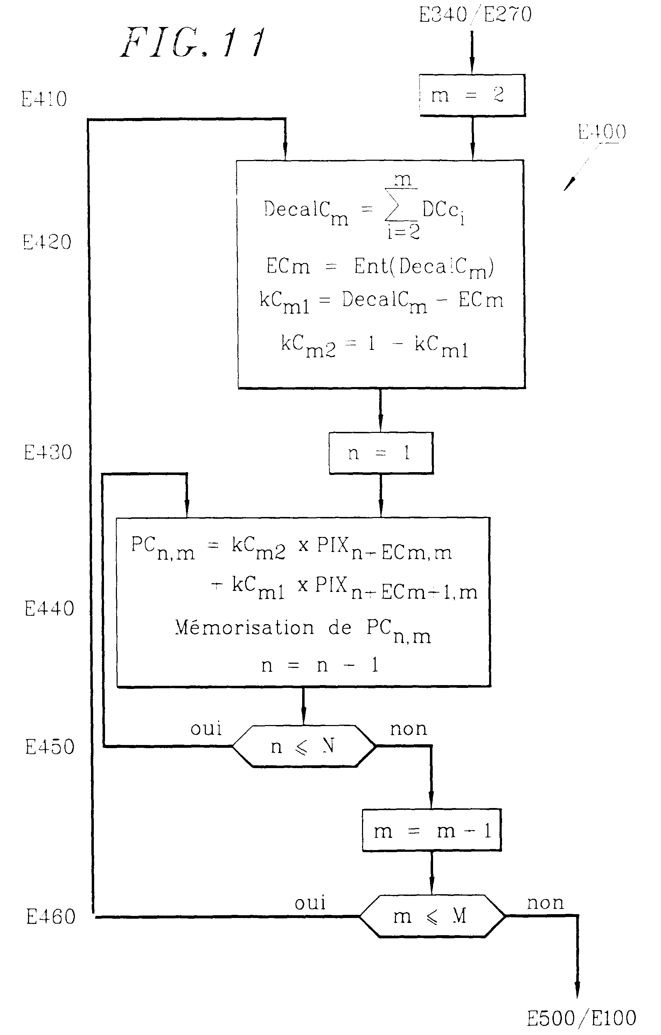

Dans tous les cas, l'étape E400 se compose d'un ensemble d'étapes E410 à E460 qui seront décrites en détail en référence à la figure 11.

La nouvelle image corrigée des effets de la dérive est mémorisée à l'étape E500 et est, de préférence également affichée à l'écran d'une console de visualisation associée au calculateur.

En variante, l'image corrigée à l'étape E400 peut être traitée à nouveau à partir de l'étape E100.

Comme montrée à la figure 9, la détermination des décalages entre colonnes comprend les étapes E210 à E270, qui sont respectivement analogues aux étapes E21 à E27 décrites en référence à la figure 5, à la différence près que les décalages ne sont pas déterminées ligne à ligne, mais colonne à colonne.

La lettre "C" est ajoutée aux noms des différents paramètres. Les colonnes sont comparées deux à deux pour déterminer un premier décalage DecCmin de la colonne $C_m$ par rapport à la colonne $C_{m-1}$ , exprimé en nombre entier de pixel, puis un second décalage $DC_m$ de la colonne $C_m$ par rapport à la colonne $C_{m-1}$ exprimé en nombre non entier de pixel. Lorsque tous les décalages $DC_m$, pour $2 \leq m \leq M$, sont déterminés, l'algorithme passe à l'étape E310.

En référence à la figure 10, le traitement des décalages entre colonnes comprend quatre étapes E310 à E340. Ce traitement a pour but de corriger les valeurs des décalages $DC_m$, pour $2 \leq m \leq M$, déterminés à l'étape E260.

L'étape E310 comprend le calcul de la somme SC et de la moyenne MC des décalages $DC_m$, pour $2 \leq m \leq M$.

L'étape E320 initialise le paramètre m à 2 et l'étape E330 détermine le décalage corrigé $DCc_m$ de la colonne $C_m$, qui est égal à la moyenne MC des décalages $DC_m$. Le paramètre m est incrémenté de 1 pour passer à la colonne suivante. A l'étape E340, si m est inférieur ou égal à M, l'étape E330 est à nouveau déroulée pour cette valeur de m; sinon, l'algorithme passe à l'étape suivante E340.

Cette correction de dérive suppose que la dérive de l'aéronef est quasiment constante pendant la prise de vue de l'image ce qui implique que la correction est identique pour toutes les colonnes.

En variante lorsque la dérive de l'aéronef est modifiée graduellement pendant la prise de vue de l'image, le calcul de la somme SC et de la moyenne MC des décalages $DC_m$, pour $2 \leq m \leq M$, est remplacé par le calcul d'un ensemble de sommes et moyennes calculées sur des groupes de valeurs de décalage. Par exemple, lorsque la dérive présente trois valeurs successives pendant la prise de vue, les sommes et moyennes sont:

$$SC_1 = \sum_{m=2}^{m1} DC_m \; ; \; MC_1 = SC_1/m1$$

$$SC_2 = \sum_{m=m1-1}^{m2} DC_m \; ; \; MC_2 = SC_2/(m2-m1)$$

$$SC_3 = \sum_{m=m2-1}^{M} DC_m \; ; \; MC_3 = SC_3/(M-m2)$$

avec 2≤m1≤m2≤M. Le décalage corrigé $DCc_m$ est alors égal soit à $SC_1$, soit à $SC_2$, soit à $SC_3$ suivant que m est compris entre 2 et m1, ou m1 + 1 et m2, ou m2 + 1 et M.

En variante, l'algorithme ne comprend pas les étapes E310 à E340 précédemment décrites. Dans ce cas, l'algorithme passe directement de l'étape E270 à l'étape E410.

En référence à la figure 11, la détermination de l'image corrigée comprend les étapes E410 à E460, respectivement analogues aux étapes E41 à E46 décrites en référence à la figure 7. La détermination de l'image corrigée n'est pas effectuée ligne par ligne, mais colonne par colonne. Pour chaque colonne $C_m$ sont déterminés les niveaux de luminosité corrigés de pixel $PC_{n,m}$, pour 1≤n≤N, chacun en fonction de niveaux enregistrés ou calculés à l'étape E42 $PIX_{n+ECm,m}$ et $PIX_{n+ECm+1,m}$ de deux pixels adjacents dans la même colonne. Lorsque toutes les colonnes sont corrigées, l'algorithme passe à l'étape E500 de mémorisation de l'image corrigée.

Les deux types de correction d'image respectivement suivant les étapes E10 à E40 et E100 à E400 sont par exemple effectués séquentiellement sur une image, suivant cet ordre ou l'ordre inverse, ou bien un opérateur choisit de n'effectuer que l'un des deux types de correction pour une image donnée.

**Revendications**

1. Procédé de correction spatiale d'image numérique composée d'un ensemble de rangées de pixels ($L_1$ à $L_N$; $C_1$ à $C_M$) qui sont des lignes ou des colonnes de l'image, comprenant

   la comparaison (E23;E230) des rangées deux à deux pour déterminer (E25;E250) des premiers décalages entre rangées (Decmin;DecCmin) exprimés en nombre entier de pixel,

   caractérisé en ce qu'il comprend

   la détermination (E26;E260) de seconds décalages entre rangées ($D_n$;$DC_m$) exprimés en nombre non entier de pixel, en fonction des premiers décalages,
   la détermination (E42;E420) pour chaque rangée ($L_n$;$C_m$) d'un troisième décalage ($Decal_n$;$DecalC_m$) de ladite rangée ($L_n$;$C_m$) par rapport à une rangée de référence ($L_1$;$C_1$) en fonction des seconds décalages ($D_n$;$DC_m$), et
   la correction de chaque rangée (E44;E440) par un décalage des pixels de ladite chaque rangée par rapport à la rangée de référence égal à la partie entière du troisième décalage pour ladite chaque rangée, et par un lissage spatial des pixels de ladite chaque rangée avec des coefficients de lissage ($k_{n1}$,$k_{n2}$;$kC_{m1}$,$kC_{m2}$) fonction du troisième décalage pour ladite chaque rangée.

2. Procédé de correction conforme à la revendication 1, caractérisé en ce que la comparaison (E23;E230) des rangées deux à deux comprend pour deux rangées données ($L_n$,$L_{n-1}$;$C_m$,$C_{m-1}$), le calcul de sommes de corrélation ($S_{Dec}$;$S_{DecC}$) entre les deux rangées décalées respectivement lorsque l'une est soumise par rapport à l'autre à des décalages prédéterminés exprimés en nombre entier de pixel (Dec;DecC), la recherche d'une somme de corrélation minimale ($S_{Decmin}$;$S_{DecCmin}$) parmi les sommes de corrélation calculées afin d'en déduire ledit premier décalage (Decmin;DecCmin) entre les deux rangées exprimé en nombre entier de pixel.

3. Procédé de correction conforme à la revendication 2, dans lequel une somme de corrélation ($S_{Dec}$;$S_{DecC}$) entre deux rangées décalées d'un décalage (Dec;DecC) exprimé en nombre entier de pixel est égale à la somme des valeurs absolues des différences des valeurs des pixels d'une rangée et des valeurs des pixels décalés dudit décalage (Dec;DecC) de l'autre rangée.

4. Procédé de correction conforme à l'une quelconque des revendications 2 ou 3, dans lequel la détermination (E26; E260) du second décalage entre deux rangées ($D_n$;$DC_n$) exprimée en nombre non entier de pixel est réalisée par une interpolation des sommes de corrélation ($S_{Dec}$;$S_{DecC}$) fonction des décalages (Dec;DecC) prédéterminés entre les deux rangées, par une fonction polynômiale d'ordre supérieur ou égal à 2 autour du premier décalage (Decmin; DecCmin), le second décalage ($D_n$;$DC_m$) étant l'abscisse d'un minimum de la fonction d'interpolation.

5. Procédé de correction conforme à l'une quelconque des revendications 1 à 4, dans lequel la détermination (E42; E420) pour une rangée donnée ($L_n$;$C_m$) d'un troisième décalage ($Decal_n$;$DecalC_m$) de ladite rangée ($L_n$;$C_m$) par rapport à une rangée de référence ($L_1$;$C_1$) est réalisée par la somme des seconds décalages ($D_n$;$DC_m$) des rangées comprises entre la rangée de référence ($L_1$;$C_1$) et la rangée donnée ($L_n$;$C_m$).

6. Procédé de correction conforme à l'une quelconque des revendications 1 à 5, dans lequel les coefficients de

lissage spatial ($k_{n1}$,$k_{n2}$;$kC_{m1}$,$kC_{m2}$) d'une rangée ($L_n$;$C_m$) sont tels que leur somme est égale à 1.

7. Procédé de correction conforme à l'une quelconque des revendications 1 à 6, dans lequel les coefficients de lissage spatial ($k_{n1}$, $k_{n2}$;$kC_{m1}$,$kC_{m2}$) d'une rangée ($L_n$;$C_m$) sont tels qu'un premier coefficient ($k_{n1}$;$kC_{m1}$) est égal à la partie décimale du troisième décalage ($Decal_n$;$DecalC_m$) de la rangée ($L_n$;$C_m$) et qu'un second coefficient ($k_{n2}$;$kC_{m2}$) est égal au complémentaire à 1 du premier coefficient.

8. Procédé de correction conforme à l'une quelconque des revendications 1 à 7, dans lequel les seconds décalages entre rangées ($D_n$) sont remplacés (E33) par des décalages corrigés ($Dc_n$) qui dépendent des seconds décalages et dont leur valeur moyenne est nulle.

9. Procédé de correction spatiale d'image conforme à l'une quelconque des revendications 1 à 7, dans lequel les seconds décalages entre rangées ($DC_m$) sont remplacés (E330) par des décalages corrigés respectivement égaux à la moyenne (MC) des seconds décalages.

**Patentansprüche**

1. Verfahren zur räumlichen Korrektur eines digitalen Bildes, bestehend aus einer Gesamtheit von Reihen von Pixeln ($L_1$ bis $L_N$; $C_1$ bis $C_M$), die Zeilen oder Spalten des Bildes sind, umfassend

    den paarweisen Vergleich (E23;E230) der Reihen, um erste Verschiebungen zwischen Reihen (Decmin;DecCmin), ausgedrückt in einer ganzen Zahl von Pixeln, zu bestimmen (E25;E250),

    dadurch gekennzeichnet, dass es umfasst

    die Bestimmung (E26;E260) zweiter Verschiebungen zwischen Reihen ($D_n$;$DC_m$), ausgedrückt in nichtganzzahligen Pixelzahlen, in Abhängigkeit von den ersten Verschiebungen,
    für jede Reihe ($L_n$;$C_m$) die Bestimmung (E42;E420) einer dritten Verschiebung ($Decal_n$;$DecalC_m$) der genannten Reihe ($L_n$;$C_m$) relativ zu einer Bezugsreihe ($L_1$;$C_1$) in Abhängigkeit von den zweiten Verschiebungen ($D_n$; $DC_m$), und
    die Korrektur jeder Reihe (E44;E440) durch eine Verschiebung der Pixel dieser Reihe relativ zur Bezugsreihe um den ganzzahligen Anteil der dritten Verschiebung für diese Reihe und durch eine räumliche Glättung der Pixel dieser Reihe mit Glättkoeffizienten ($k_{n1}$,$k_{n2}$;$kC_{m1}$,$kC_{m2}$) in Abhängigkeit von der dritten Verschiebung für diese Reihe.

2. Korrekturverfahren nach Patentanspruch 1, dadurch gekennzeichnet, dass der paarweise Vergleich (E23;E230) der Reihen für zwei gegebene Reihen ($L_n$,$L_{n-1}$;$C_m$,$C_{m-1}$) die Berechnung von Korrelationssummen ($S_{Dec}$;$S_{DecC}$) jeweils zwischen den beiden verschobenen Reihen umfasst, wenn die eine relativ zur anderen vorbestimmten Verschiebungen, ausgedrückt in einer ganzen Pixelzahl (Dec;DecC), unterliegt, die Suche nach einer minimalen Korrelationssumme ($S_{Decmin}$;$S_{DecCmin}$) unter den berechneten Korrelationssummen, um daraus die genannte erste Verschiebung (Decmin;DecCmin) zwischen den beiden Reihen, ausgedrückt in einer ganzen Pixelzahl, abzuleiten.

3. Korrekturverfahren nach Patentanspruch 2, in dem eine Korrelationssumme ($S_{Dec}$;$S_{DecC}$) zwischen zwei, um eine Verschiebung (Dec;DecC), ausgedrückt in ganzen Pixelzahlen, verschobenen Reihen, der Summe der Absolutwerte der Differenzen der Werte der Pixel einer Reihe und der Werte der verschobenen Pixel der genannten Verschiebung (Dec;DecC) der anderen Reihe gleich ist.

4. Korrekturverfahren nach irgendeinem der Patentansprüche 2 oder 3, in dem die Bestimmung (E26;E260) der zweiten Verschiebung zwischen zwei Reihen ($D_n$;$DC_n$), ausgedrückt in nichtganzen Pixelzahlen, durch eine Interpolation der Korrelationssummen ($S_{Dec}$;$S_{DecC}$) erfolgt, die Funktion der vorbestimmten Verschiebungen (Dec; DecC) zwischen den beiden Reihen sind, durch eine Polynomialfunktion einer Ordnung grösser oder gleich 2 um die erste Verschiebung (Decmin;DecCmin), wobei die zweite Verschiebung ($D_n$;$DC_m$) die Abszisse eines Minimums der Interpolationsfunktion ist.

5. Korrekturverfahren nach irgendeinem der Patentansprüche 1 bis 4, in dem für eine gegebene Reihe ($L_n$;$C_m$) die Bestimmung (E42;E420) einer dritten Verschiebung ($Decal_n$;$DecalC_m$) der genannten Reihe ($L_n$;$C_m$) relativ zu einer Bezugsreihe ($L_1$;$C_1$) durch die Summe der zweiten Verschiebungen ($D_n$;$DC_m$) der Reihen erfolgt, die sich

zwischen der Bezugsreihe ($L_1$;$C_1$) und der gegebenen Reihe ($L_n$;$C_m$) befinden.

6. Korrekturverfahren nach irgendeinem der Patentansprüche 1 bis 5, in dem die räumlichen Glättkoeffizienten ($k_{n1}$, $k_{n2}$;$kC_{m1}$,$kC_{m2}$) einer Reihe (Ln;Cm) derart sind, dass ihre Summe gleich 1 ist.

7. Korrekturverfahren nach irgendeinem der Patentansprüche 1 bis 6, in dem die räumlichen Glättkoeffizienten ($k_{n1}$, $k_{n2}$;$kC_{m1}$,$kC_{m2}$) einer Reihe ($L_n$;$C_m$) derart sind, dass ein erster Koeffizient ($k_{n1}$,$kC_{m1}$) gleich dem Dezimalanteil der dritten Verschiebung ($Decal_n$;$DecalC_m$) der Reihe ($L_n$;$C_m$) ist und daß ein zweiter Koeffizient ($k_{n2}$,$kC_{m2}$) gleich der Ergänzung zu 1 des ersten Koeffizienten ist.

8. Korrekturverfahren nach irgendeinem der Patentansprüche 1 bis 7, in dem die zweiten Verschiebungen zwischen Reihen ($D_n$) durch korrigierte Verschiebungen ($Dc_n$) ersetzt werden (E33), die von den zweiten Verschiebungen abhängen und deren Mittelwert gleich Null ist.

9. Verfahren zur räumlichen Bild korrektur nach irgendeinem der Patentansprüche 1 bis 7, in dem die zweiten Verschiebungen zwischen Reihen ($DC_m$) durch korrigierte Verschiebungen ersetzt werden (E330), die jeweils dem Mittelwert (MC) der zweiten Verschiebungen gleich sind.


## Claims

1. A method for spatial correction of a digital image made up of a set of rows of pixels ($L_1$ to $L_N$; $C_1$ to $C_M$) which are lines or columns of the image, comprising

   comparison (E23; E230) of the rows in pairs in order to determine (E25; E250) first inter-row shifts (Decmin; DecCmin) expressed as a whole pixel number,

   characterised in that it comprises

   determination (E26; E260) of second inter-row shifts ($D_n$; $DC_m$) expressed as a non-whole pixel number, as a function of the first shifts,
   determination (E42; E420) for each row ($L_n$; $C_m$) of a third shift ($Decal_n$; $DecalC_m$) of the said row ($L_n$; $C_m$) with respect to a reference row ($L_1$; $C_1$) as a function of the second shifts ($D_n$; $DC_m$), and
   correction of each row (E44; E440) by a shift of the pixels of said each row with respect to the reference row equal to the whole part of the third shift for said each row, and by a spatial smoothing of the pixels of the said each row with smoothing coefficients ($k_{n1}$, $k_{n2}$; $kC_{m1}$, $kC_{m2}$) as a function of the third shift for the said each row.

2. A correction method according to Claim 1, characterised in that the comparison (E23; E230) of the rows in pairs comprises for two given rows ($L_n$, $L_{n-1}$; $C_m$, $C_{m-1}$), calculating correlation sums ($S_{Dec}$; $S_{DecC}$) between the two respectively shifted rows when one is subjected with respect to the other to predetermined shifts expressed as a whole pixel number (Dec; DecC), searching for a minimal correlation sum ($S_{Decmin}$; $S_{DecCmin}$) amongst the calculated correlation sums in order to deduce therefrom the said first shift (Decmin; DecCmin) between the two rows expressed as a whole pixel number.

3. A correction method according to Claim 2, wherein a correlation sum ($S_{Dec}$; $S_{DecC}$) between two rows shifted by a shift (Dec; DecC) expressed as a whole pixel number is equal to the sum of the absolute values of the differences of the values of the pixels of one row and the values of the pixels shifted by the said shift (Dec; DecC) of the other row.

4. A correction method according to either Claim 2 or Claim 3, wherein the determination (E26; E260) of the second shift between two rows ($D_n$; $DC_n$) expressed as a non-whole pixel number is effected by interpolation of the correlation sums ($S_{Dec}$; $S_{DecC}$) as a function of the predetermined shifts (Dec; DecC) between the two rows, by a polynomial function of an order greater than or equal to 2 around the first shift (Decmin; DecCmin), the second shift ($D_n$; $DC_m$) being the abscissa of a minimum of the interpolation function.

5. A correction method according to any one of Claims 1 to 4, wherein the determination (E42; E420) for a given row ($L_n$; $C_m$) of a third shift ($Decal_n$; $DecalC_m$) of the said row ($L_n$; $C_m$) with respect to a reference row ($L_1$; $C_1$) is embodied by the sum of the second shifts ($D_n$; $DC_m$) of the rows contained between the reference row ($L_1$; $C_1$)

and the given row $(L_n; C_m)$.

6. A correction method according to any one of Claims 1 to 5, wherein the spatial smoothing coefficients $(k_{n1}, k_{n2}; kC_{m1}, kC_{m2})$ of a row $(L_n; C_m)$ are such that their sum is equal to 1.

7. A correction method according to any one of Claims 1 to 6, wherein the spatial smoothing coefficients $(k_{n1}, k_{n2}; kC_{m1}, kC_{m2})$ of a row $(L_n; C_m)$ are such that a first coefficient $(k_{n1}; kC_{m1})$ is equal to the decimal part of the third shift $(Decal_n; DecalC_m)$ of the row $(L_n; C_m)$ and that a second coefficient $(k_{n2}; kC_{n2})$ is equal to the ones complement of the first coefficient.

8. A correction method according to any one of Claims 1 to 7, wherein the second inter-row shifts $(D_n)$ are replaced (E33) by corrected shifts $(Dc_n)$ which depend on the second shifts and the average value of which is zero.

9. An image spatial correction method according to any one of Claims 1 to 7, wherein the second inter-row shifts $(DC_m)$ are replaced (E330) by corrected shifts respectively equal to the mean (MC) of the second shifts.

FIG. 1

## FIG.2

$L_n$

$C_m$

## FIG.3

$L_n$

$C_m$

# FIG.4

E10

Lecture d'une image

E20
(Figure 5)

Détermination des
décalages entre lignes

E30
(Figure 6)

Traitement des
décalages entre lignes

E40
(Figure 7)

Détermination de
l'image corrigée

E50

Mémorisation/Restitution
de l'image corrigée

## FIG.5

E21

$$n = 2 \quad \text{E20}$$

E22

$$Dec = -Dmin$$

E23

$$S_{Dec} = \sum_{m=Bord}^{m=M-Bord} \left| PIX_{n-1,m} - PIX_{n,m+Dec} \right|$$

Mémorisation de $S_{Dec}$

$$Dec = Dec - 1$$

E24

oui — Dec ⩽ Dmax — non

E25

Recherche de la valeur minimale
$S_{Decmin}$ et de Decmin associé

E26

Interpolation par une parabole
passant par (Decmin, $S_{Decmin}$)

Recherche du sommet de la
parabole : $D_n$

Mémorisation de $D_n$

$$n = n + 1$$

E27

oui — n ⩽ N — non

E31/E41

# $FIG.6$

E30

E27

E31

$$S_1 = \sum_{n=2}^{N} D_n$$

$$S_2 = \sum_{n=2}^{N/2} D_n$$

$$P = 4 \times (S_1 - 2 \times S_2) / N^2$$

$$n = 2$$

E32

E33

$$Cor_n = S_1/N + P \times (n - N/2)$$

$$Dc_n = D_n - Cor_n$$

Mémorisation de $Dc_n$

$$n = n + 1$$

E34

oui     $n \leqslant N$     non

E41

# FIG.7

E34/E27

$$n = 2$$

E41

E42

$$Decal_n = \sum_{i=2}^{n} Dc_i$$

$$En = Ent(Decal_n)$$

$$k_{n1} = Decal_n - En$$

$$k_{n2} = 1 - k_{n1}$$

E40

E43

$$m = 1$$

E44

$$Pc_{n,m} = k_{n2} \times PIX_{n,m+En}$$

$$+ k_{n1} \times PIX_{n,m+En+1}$$

Mémorisation de $Pc_{n,m}$

$$m = m - 1$$

E45

oui — $m \leqslant M$ — non

$$n = n + 1$$

E46

oui — $n \leqslant N$ — non

E50/E10

# FIG.8

| | |
|---|---|
| E100 | Lecture d'une image |
| E200 (FIG.9) | Détermination des décalages entre colonnes |
| E300 (FIG.10) | Traitement des décalages entre colonnes |
| E400 (FIG.11) | Détermination de l'image corrigée |
| E500 | Mémorisation/Restitution de l'image corrigée |

# *FIG.9*

E210

m = 2

E200

E220

$$DecC = -DminC$$

E230

$$S_{DecC} = \sum_{n=BordC}^{n=N-BordC} PIX_{n,m-1} - PIX_{n-DecC,m}$$

Mémorisation de $S_{DecC}$

$$DecC = DecC - 1$$

E240 — oui — $DecC \leqslant DmaxC$ — non

E250

Recherche de la valeur minimale $S_{DecCmin}$ et de DecCmin associé

E260

Interpolation par une parabole passant par (DecCmin, $S_{DecCmin}$) Recherche du sommet de la parabole : $DC_m$ Mémorisation de $DC_m$

$$m = m + 1$$

E270 — oui — $m \leqslant M$ — non

E310/E410

# FIG. 10

E300

E270

E310

$$SC = \sum_{m=2}^{M} DC_m$$

$$MC = SC/M$$

$$m = 2$$

E320

E330

$$DCc_m = MC$$

$$m = m + 1$$

E340    oui    $m \leqslant M$    non

E410

$FIG.11$

E340/E270

E410

E100

$m = 2$

E420

$$DecalC_m = \sum_{i=2}^{m} DCc_i$$

$$ECm = Ent(DecalC_m)$$

$$kC_{m1} = DecalC_m - ECm$$

$$kC_{m2} = 1 - kC_{m1}$$

E430

$n = 1$

E440

$$PC_{n,m} = kC_{m2} \times PIX_{n+ECm,m}$$

$$+ kC_{m1} \times PIX_{n+ECm+1,m}$$

Mémorisation de $PC_{n,m}$

$$n = n + 1$$

E450

oui   $n \leqslant N$   non

$m = m + 1$

E460

oui   $m \leqslant M$   non

E500/E100